(19) Europäisches Patentamt
European Patent Office
Office européen des brevets

(11) **EP 3 949 740 A1**

(12) **EUROPEAN PATENT APPLICATION**
published in accordance with Art. 153(4) EPC

(43) Date of publication:
**09.02.2022 Bulletin 2022/06**

(21) Application number: **20782446.7**

(22) Date of filing: **26.03.2020**

(51) International Patent Classification (IPC):
*A23C 9/14* [(2006.01)]    *A23C 9/142* [(2006.01)]
*A23C 21/00* [(2006.01)]    *A23J 3/08* [(2006.01)]

(52) Cooperative Patent Classification (CPC):
**A23C 9/14; A23C 9/142; A23C 21/00; A23J 3/08**

(86) International application number:
**PCT/JP2020/013637**

(87) International publication number:
**WO 2020/203635 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2019 JP 2019065450**

(71) Applicant: **Morinaga Milk Industry Co., Ltd.
Minato-ku
Tokyo 108-8384 (JP)**

(72) Inventors:
• **WATAI Naoki
Zama-shi, Kanagawa 252-8583 (JP)**
• **ODAKA Mirei
Zama-shi, Kanagawa 252-8583 (JP)**

(74) Representative: **Vossius & Partner
Patentanwälte Rechtsanwälte mbB
Siebertstraße 3
81675 München (DE)**

(54) **METHOD FOR MANUFACTURING WHEY AND WHEY**

(57) A method for producing whey according to one aspect of the present invention includes a step of heating raw material milk containing casein and whey protein under a heating condition of an $F_o$ value of $1.0 \times 10^{-9}$ or more, a step of cooling the raw material milk heated under the heating condition to a temperature $T_1$ of less than 20°C, and a step of subjecting the raw material milk cooled to the temperature $T_1$ to microfiltration membrane treatment to obtain whey as a membrane permeation fraction.

EP 3 949 740 A1

**Description**

Technical Field

The present invention relates to a method for producing whey and whey.

The present application claims priority based on Japanese Patent Application No. 2019-065450 filed in Japan on March 29, 2019, the contents of which are incorporated herein by reference.

Background Art

Whey protein concentrate (hereinafter also referred to as "WPC") obtained by removing casein and the like from whey to concentrate whey protein and whey protein isolate (hereinafter also referred to as "WPI") obtained by removing casein and the like from whey to isolate whey protein are used as protein sources in nutritional supplements and the like.

As a raw material for WPC and WPI, cheese whey produced as a by-product during cheese production and acid whey obtained by allowing acid to act on milk to precipitate casein are often used, but whey obtained as a membrane permeation fraction by subjecting milk such as skim milk and raw milk to microfiltration (hereinafter also referred to as "MF") membrane treatment (hereinafter also referred to as "milk-derived whey") may also be used. WPC and WPI using cheese whey as a raw material contain fermentation products produced as by-products during cheese production. WPC and WPI using acid whey as a raw material have bad flavor, and waste liquid containing acid and acid compound is generated during production, so that load on environment is large. On the other hand, milk-derived whey does not contain impurities such as fermentation products and does not use acid, and thus has good flavor. In addition, no waste liquid containing acid and acid compound is generated.

Casein forms micellar structures in milk, so-called casein micelles (sometimes referred to as "micellar casein").

It has been reported that when skim milk is cooled to 7°C or lower, the casein content (particularly β-casein) in the supernatant (soluble phase) after centrifugation is increased due to dissociation of casein micelles, and that when skim milk is heated to 10°C or higher, the casein content in the soluble phase is decreased (NPL 1).

It has been also reported that when skim milk is fractionated using a ceramic MF membrane while maintaining the temperature at 10°C or 50°C, a membrane non-permeation fraction having a higher casein content than that at 10°C can be obtained at 50°C (NPL 2).

As a method for recovering β-casein from milk, a method has been proposed in which milk is cooled to a temperature at which β-casein is dissociated from micelles and subjected to MF membrane treatment, and the obtained membrane permeation fraction is subjected to desalting treatment (PTL 1).

As a method for producing a β-casein-containing composition from milk, a method has been proposed in which milk is preheated to at least 20°C and subjected to MF membrane treatment, and the obtained membrane permeation fraction is cooled to 0 to 15°C and subjected to MF membrane treatment (PTL 2).

Citation List

Patent Literature

[PTL 1] International Patent Publication WO2007/055932
[PTL 2] JP-T-2016-503660

Non-Patent Literature

[NPL 1] Ali E. Ali et. al. "J. Dairy Research" (1980), 47,371-382
[NPL 2] Shane V. Crowley et. al. "International Dairy J." (2018), 81, 72-79

Summary of Invention

Technical Problem

In the production of milk-derived whey, an MF membrane through which casein micelles do not permeate is used in the MF membrane treatment that is usually carried out at a low temperature, but milk-derived whey obtained as a membrane permeation fraction thereof contains casein at a higher ratio than cheese whey or acid whey. This is probably because casein dissociated from the casein micelle permeates through the MF membrane.

Since milk-derived whey contains casein, WPC and WPI obtained by concentrating milk-derived whey also contain casein. WPC and WPI obtained from milk-derived whey have a higher content of casein than WPC and WPI obtained from cheese whey, and thus have low solubility in water.

In addition, when WPC or WPI obtained from milk-derived whey is added to an acidic beverage or the like, the casein is coagulated by the acid, and thus the use thereof is limited.

As described in NPL 2, it is considered that treatment of milk with an MF membrane while maintaining the milk at a high temperature of about 50°C is effective in reducing mixing of casein into a membrane permeation fraction.

However, in the production of milk-derived whey, when the MF membrane treatment is performed at a high temperature as described above, the following problems are concerned. Therefore, the MF membrane treatment is preferably performed at a low temperature (lower than 20°C, further 10°C or lower).

- Aggregation of whey protein due to exposure to a high temperature for a long time, and fouling of the MF membrane due to the aggregation. In addition, the production capacity, product quality, and yield are decreased due to fouling.
- Increase of thermophile bacteria.
- Deterioration of the MF membrane when an organic membrane is used as the MF membrane (generally, the allowable temperature of the organic membrane is about 50°C to 55°C, but deterioration is accelerated by long-term use at a high temperature).
- High cost when an inorganic membrane (ceramic membrane) generally having high heat resistance is used as the MF membrane (generally, the inorganic membrane has high heat resistance but is more expensive than the organic membrane).

None of NPLs 1 and 2 and PTLs 1 and 2 discuss reducing the casein contamination rate while performing MF membrane treatment at a low temperature.

An object of one aspect of the present invention is to provide a method for producing whey that can produce milk-derived whey having a low casein contamination rate by subjecting raw material milk to MF membrane treatment at a low temperature, and whey derived from milk and having a low casein contamination rate.

Solution to Problem

[1] A method for producing whey, including:

a step of heating raw material milk containing casein and whey protein under a heating condition of an $F_0$ value of $1.0 \times 10^{-9}$ or more;
a step of cooling the raw material milk heated under the heating condition to a temperature $T_1$ of less than 20°C; and
a step of subjecting the raw material milk cooled to the temperature $T_1$ to microfiltration membrane treatment to obtain whey as a membrane permeation fraction.

[2] The method for producing whey according to [1], wherein the heating is performed under a heating condition of 35°C or higher.
[3] The method for producing whey according to [1] or [2], further including a step of cooling the raw material milk to a temperature $T_0$ of 10°C or lower before heating the raw material milk.
[4] Whey containing a microfiltration membrane permeation fraction of raw material milk, wherein the whey has a casein content in protein of less than 13%.

Advantageous Effects of Invention

According to the method for producing whey of the present invention, raw material milk is subjected to MF membrane treatment at a low temperature to produce milk-derived whey having a low casein contamination rate.

The whey of the present invention is derived from milk and has a low casein contamination rate.

Brief Description of Drawings

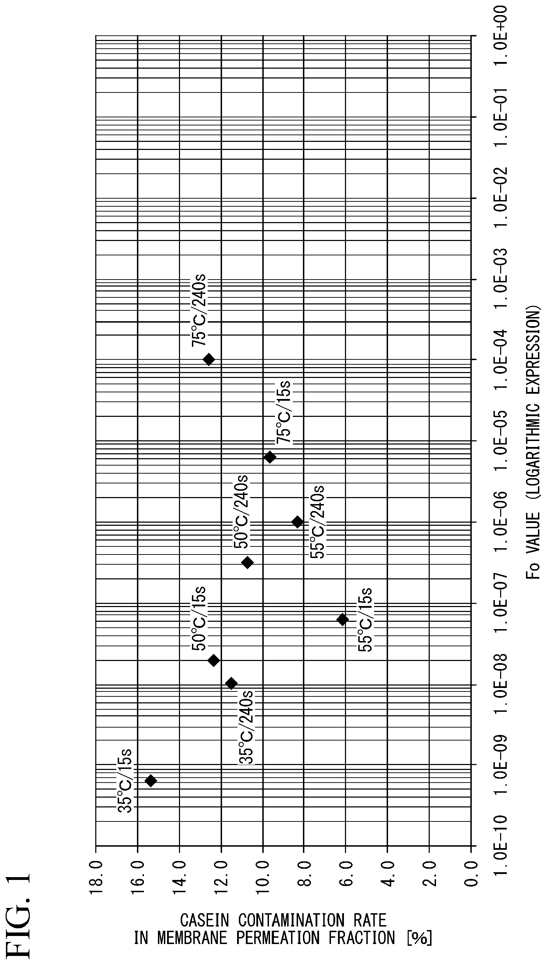

Fig. 1 is a graph showing the results of Test Example 1.

Description of Embodiments

In the present invention, the following measurement methods are used.

The fat content (% by mass) is determined by the Roese-Gottlieb method.

The protein content (% by mass) is determined by the combustion method.

The ash content (% by mass) is determined by the direct ashing method.

The moisture content (% by mass) is determined by the direct heat drying method. Specifically, the moisture content (% by mass) is defined as a weight loss ((mass (g) of sample before drying - mass (g) of sample after drying) / mass (g) of sample before drying $\times$ 100) when the sample is dried in a thermostat at 99°C for 4 hours.

The carbohydrate content (% by mass) is determined by subtracting the sum of the four components (fat, protein, ash, and moisture) from the sum of all components (calculation formula: 100 - (sum of the four components of fat, protein, ash, and moisture)).

The solid content concentration (% by mass) is calculated as a content other than the moisture content from the moisture content measured by the direct heat drying method (calculation formula: 100 - moisture content = solid content concentration).

The content (%) of casein in the protein is determined as the ratio of the total band intensity of "$\alpha$-casein, $\beta$-casein, and $\kappa$-casein" to the total band intensity of "$\alpha$-casein, $\beta$-casein, $\kappa$-casein, $\beta$-lactoglobulin, and $\alpha$-lactalbumin" measured by SDS-PAGE (sodium dodecyl sulfate-polyacrylamide gel electrophoresis). In the description herein, the content of casein in the protein in whey is also referred to as "casein contamination rate".

The content (%) of whey protein in the protein is determined as the ratio of the total band intensity of "$\beta$-lactoglobulin and $\alpha$-lactalbumin" to the total band intensity of "$\alpha$-casein, $\beta$-casein, $\kappa$-casein, $\beta$-lactoglobulin, and $\alpha$-lactalbumin" measured by SDS-PAGE (sodium dodecyl sulfate-polyacrylamide gel electrophoresis).

<Method for Producing Whey>

The method for producing whey of the present invention includes a step of heating raw material milk containing casein and whey proteins under a heating condition of an $F_0$ value of $1.0 \times 10^{-9}$ or more (heating step), a step of cooling the raw material milk heated under the heating condition to a temperature $T_1$ of less than 20°C (post-heating cooling step), and a step of subjecting the raw material milk cooled to the temperature $T_1$ to MF membrane treatment to obtain whey as a membrane permeation fraction (MF step).

The method for producing whey of the present invention may optionally include a step of cooling the raw material milk to a temperature $T_0$ of 10°C or lower before the heating step (pre-heating cooling step).

(Raw Material Milk)

The raw material milk contains at least casein and whey protein as the protein.

The raw material milk contains moisture in addition to the protein, and is liquid.

The raw material milk may contain fat, ash (minerals such as calcium and sodium), carbohydrate (lactose and the like), and the like.

An example of the composition of the raw material milk is shown below. In the following composition, the content of each component is based on the total mass of the raw material milk.

Moisture content: 50 to 99.8% by mass (further 75 to 98% by mass);
Protein content: 0.03 to 30% by mass (further 0.1 to 15% by mass);
Fat content: 0 to 40% by mass (further 0 to 20% by mass);
Ash content: 0.04 to 10% by mass (further 0.2 to 5% by mass);
Carbohydrate content: 0.1 to 20% by mass (further 1 to 10% by mass).

The solid content concentration of the raw material milk is, for example, 0.2 to 50% by mass (further 2 to 25% by mass) with respect to the total mass of the raw material milk.

In the raw material milk, the content of casein in the protein is, for example, 15 to 99.9% (further 50 to 95%), and the content of whey protein in the protein is, for example, 0.1 to 85% (further 5 to 50%).

The raw material milk may be any milk containing casein and whey protein as the protein, and examples thereof include raw milk and skim milk. The skim milk may be obtained by defatting raw milk or by dissolving powdered skim milk in water.

The skim milk may be subjected to a concentration treatment or a desalting treatment.

The raw material milk is preferably derived from a mammal, more preferably derived from a cow, sheep, or goat, and still more preferably derived from a cow.

At least a part of the casein in the raw material milk typically forms micelles. That is, the raw material milk typically contains casein micelles.

Preferably, the casein micelles are not denatured, i.e., have a native structure.

The casein micelles may contain calcium phosphate. That is, the casein micelles may be micelles composed of casein and calcium phosphate.

A part of the casein in the raw material milk may not form micelles.

(Pre-heating Cooling Step)

In the pre-heating cooling step, the raw material milk is cooled to a temperature $T_0$ of 10°C or lower. Thus, deterioration of the raw material milk and proliferation of microorganisms can be suppressed. The temperature $T_0$ is preferably 7°C or lower, more preferably 4°C or lower. The lower limit of the temperature $T_0$ is, for example, 2°C. The temperature $T_0$ may be 2 to 10°C, 2 to 7°C, or 2 to 4°C.

The temperature of the raw material milk before cooling to the temperature $T_0$ is, for example, higher than 10°C and 50°C or lower.

After the raw material milk is cooled to the temperature $T_0$ in the pre-heating cooling step, the raw material milk can be held at the temperature $T_0$ before being subjected to the heating step. The time (holding time) for holding the raw material milk at the temperature $T_0$ is not particularly limited, but for example, 1 minute or more, 1 hour or more, 5 hours or more, 12 hours or more, 1 day or more, or 2 days or more, and 3 days or less, 5 days or less, or 7 days or less. The holding time may be 1 minute or more and 3 days or less, 1 hour or more and 3 days or less, 5 hours or more and 5 days or less, 12 hours or more and 5 days or less, 1 day or more and 7 days or less, or 2 days or more and 7 days or less.

In the pre-heating cooling step, a part of casein such as β-casein is dissociated from the casein micelle. The dissociated casein generally permeates through the MF membrane to increase the casein contamination rate of whey. However, in the method for producing whey of the present invention, the content of casein that does not form micelles can be reduced in the subsequent heating step.

(Heating Step)

In the heating step, the raw material milk is heated under a heating condition having an $F_o$ value of $1.0 \times 10^{-9}$ or more.

The $F_o$ value is preferably $1.0 \times 10^{-8}$ to $1.0 \times 10^{-3}$, more preferably $1.0 \times 10^{-8}$ to $1.0 \times 10^{-5}$, and still more preferably $1.0 \times 10^{-8}$ to $1.0 \times 10^{-6}$.

When the $F_o$ value is within the above range, the casein that does not form micelles in the raw material milk reassociates with the casein micelles, and the content of the casein that does not form micelles is reduced. As a result, in the subsequent MF step, casein permeating through the MF membrane can be reduced, and milk-derived whey having a low casein contamination rate can be obtained.

The $F_o$ value is an F value when the Z value is 10°C.

The F value is an index used for evaluating the sterilization treatment by converting the heating temperature in the sterilization treatment into a reference temperature (121°C), and is calculated by the following equation (1). Therefore, the $F_o$ value is calculated by the following equation (2).

$$\mathrm{F\ value} = t \times 10^{(T-121)/Z} \quad (1)$$

$$\mathrm{F_o\ value} = t \times 10^{(T-121)/10} \quad (2)$$

t represents a heating time (minute), T represents a heating temperature (°C), and Z represents a Z value (°C).

In the linear portion of the graph showing the relationship between the common logarithm of the number of viable bacteria and the heating time when a certain microbial cell is heated at a predetermined temperature (°C), the time (minutes) required for reducing the number of viable bacteria to 1/10 is referred to as a D value. In a TDT curve (Thermal Death Time curve) in which logarithmic values of D values (minutes) are plotted with respect to temperature (°C), a temperature change amount at which the D value becomes 1/10 is referred to as a Z value. In general, the Z value is often about 10°C, and the F value when the Z value is 10°C is particularly referred to as $F_o$ (see Fujikawa, Japan

Journal of Food Engineering (2002), 3 (3), pp. 65-78, or R. Y. Murphy et al., Journal of food protection (2003), 66 (2), pp. 242-248).

The lower limit of the heating temperature T of the raw material milk is preferably 35°C or higher, more preferably 45°C or higher, and still more preferably 50°C or higher. The upper limit of the heating temperature T is not particularly limited as long as the $F_o$ value is satisfied, but is preferably 120°C or lower, more preferably 100°C or lower, still more preferably 75°C or lower, and even more preferably 65°C or lower. The range of the heating temperature T may be 35 to 120°C, or may be 35 to 100°C, but is preferably 35°C to 75°C, more preferably 45 to 65°C, and still more preferably 50 to 60°C.

The heating time t of the raw material milk can be appropriately set according to the $F_o$ value and the heating temperature T.

Examples of combinations of the heating temperature T and the heating time t are shown below.

Combination Example 1: The heating temperature T is 50°C, and the heating time t is $8 \times 10^{-1}$ to $7.6 \times 10^5$ seconds.

Combination Example 2: The heating temperature T is 55°C, and the heating time t is $2.4 \times 10^{-1}$ to $2.4 \times 10^5$ seconds.

Combination Example 3: The heating temperature T is 75°C, and the heating time t is $2.4 \times 10^{-3}$ to $2.4 \times 10^3$ seconds.

As the heating method, a conventional heating method, for example, a heating method used for heat sterilization can be used. The heating system may be either a batch system or a continuous system, and in the continuous system, any system such as a plate heat exchange system, an infusion system, or an injection system may be used.

(Post-heating Cooling Step)

In the post-heating cooling step, the raw material milk that is heated in the heating step is cooled to a temperature $T_1$ of lower than 20°C. When the temperature $T_1$ is lower than 20°C, the increase of the thermophilic bacteria and the fouling of the MF membrane in the MF step can be suppressed. Since this temperature $T_1$ is the allowable temperature of an organic membrane, the MF step can be performed using the organic membrane as the MF membrane.

The temperature $T_1$ is preferably 15°C or lower, more preferably 10°C or lower. The lower limit of the temperature $T_1$ is, for example, 2°C, and further 3°C. The temperature $T_1$ may be 2°C or higher and lower than 20°C, 2 to 15°C, 2 to 10°C, or 3 to 10°C.

After the raw material milk is cooled to the temperature $T_1$ in the post-heating cooling step, the raw material milk can be held at the temperature $T_1$ before being subjected to the MF step.

The time for which the raw material milk is held at the temperature $T_1$, that is, the time from cooling of the raw material milk to the temperature $T_1$ to the MF membrane treatment is preferably 3600 seconds or less, more preferably 1800 seconds or less, and still more preferably 1200 seconds or less. The shorter this time, the smaller the amount of casein dissociated from the casein micelle.

(MF Step)

In the MF step, the raw material milk cooled in the post-heating cooling step is subjected to MF membrane treatment.

In general, casein micelles do not permeate through the MF membrane, but whey protein and casein that does not form micelles permeate through the MF membrane. Therefore, when the raw material milk is subjected to the MF membrane treatment, a membrane permeation fraction (permeate) having a reduced content of casein is obtained. The obtained membrane permeation fraction can be used as it is, or can be diluted with water or concentrated as necessary to obtain whey.

In the MF membrane treatment, the raw material milk and the MF membrane are brought into contact with each other.

The pore diameter of the MF membrane is, for example, 0.01 $\mu$m 1 $\mu$m, preferably 0.02 $\mu$m to 0.6 $\mu$m, more preferably 0.05 $\mu$m to 0.2 $\mu$m, and still more preferably 0.1 $\mu$m to 0.2 $\mu$m. The pore diameter of the MF membrane is measured by, for example, a method of microscopic observation using an electron microscope or the like, a mercury intrusion method, a filtration rate method, a gas adsorption method, a streaming potential method, a positron annihilation lifetime method, a method of measuring separation characteristics using particles having a known particle size, or the like.

The temperature of the raw material milk during the MF membrane treatment is $T_1$.

The pressure during the MF membrane treatment may be controlled within a range in which a membrane permeation fraction is obtained through the MF membrane. For example, the inlet pressure of the membrane can be set to 0.01 to 1 MPa.

The treatment time of the MF membrane treatment is not particularly limited, and is, for example, 0.01 hours or more and 24 hours or less, further 0.5 hour or more and 15 hours or less.

The MF membrane treatment can be performed using a known MF membrane treatment apparatus.

<Whey>

The whey of the present invention contains a microfiltration membrane permeation fraction of raw material milk. Further, the whey of the present invention may be composed of a microfiltration membrane permeation fraction of raw material milk.

As described above, since whey protein permeates through the MF membrane, the whey of the present invention contains at least whey protein as the protein.

The whey of the present invention may contain only whey protein as the protein, or may further contain other proteins. Examples of other proteins include casein, glycomacropeptide, peptide derived from whey protein, peptide derived from casein, amino acid, and non-protein nitrogen.

The content of casein in the protein (casein contamination rate) is less than 13%, preferably 10% or less, more preferably 9% or less, still more preferably 8% or less, and even more preferably 7% or less. When the content of casein is less than 13%, the solubility of WPC and WPI obtained from the whey of the present invention is excellent. The WPC and WPI can also be used in a wide range of applications including acidic beverages. The lower limit of the content of casein in the protein is not particularly limited and may be 0%, but is preferably 0.1% or more from the viewpoint of ease of production.

The content of whey protein in the protein is, for example, 70% or more, further 80% or more.

The whey of the present invention may further contain moisture, fat, ash (minerals such as calcium and sodium), carbohydrates (lactose and the like) and the like in addition to protein.

An example of the composition of the whey of the present invention is shown below. In the following composition, the content of each component is a percentage to the total mass of whey.

Moisture content: 84 to 99.6% by mass (further 90 to 97.5% by mass);
Protein content: 0.03 to 1.5% by mass (further 0.2 to 0.8% by mass);
Fat content: 0 to 0.5% by mass (further 0 to 0.3% by mass);
Ash content: 0.04 to 1.7% by mass (further 0.3 to 1% by mass);
Carbohydrate content: 0.3 to 12% by mass (further 2 to 8% by mass).

Conventionally, cheese whey and acid whey are often used as raw materials for WPC and WPI, as described above. Cheese whey contains a milk coagulating enzyme such as rennet (whose main component is a protease called chymosin) which is an additive necessary for cheese production. Acid whey contains a component that is not derived from milk, such as a pH adjusting agent.

In the whey of the present invention, the microfiltration membrane permeation fraction of the raw material milk does not contain the milk coagulating enzyme, and is different from cheese whey in this respect. The whey of the present invention also preferably does not contain the milk coagulating enzyme. "Does not contain the milk coagulating enzyme" means that the content of the milk coagulating enzyme is less than the detection limit (lower limit) when a normal quantitative analysis is performed on a sample (a microfiltration membrane permeation fraction of raw material milk or the whey of the present invention).

In addition, in the whey of the present invention, the microfiltration membrane permeation fraction of the raw material milk does not contain the component that is not derived from milk, and is different from acid whey in this respect. The whey of the present invention also preferably does not contain the component that is not derived from milk. "Does not contain the component that is not derived from milk" specifically means that the content of the component that is not derived from milk is less than the detection limit (lower limit) when a normal quantitative analysis is performed on a sample (a microfiltration membrane permeation fraction of raw material milk or the whey of the present invention).

Preferable aspects of the whey of the present invention include the following [1] to [7].

[1] Whey containing a microfiltration membrane permeation fraction of raw material milk, not containing milk coagulating enzyme, and having a casein content in protein of less than 13%.
[2] Whey containing a microfiltration membrane permeation fraction of raw material milk, not containing chymosin, and having a casein content in protein of less than 13%.
[3] Whey containing a microfiltration membrane permeation fraction of raw material milk, not containing a component that is not derived from milk, and having a casein content in protein of less than 13%.
[4] Whey containing a microfiltration membrane permeation fraction of raw material milk, not containing milk coagulating enzyme and a component that is not derived from milk, and having a casein content in protein of less than 13%.
[5] Whey containing a microfiltration membrane permeation fraction of raw material milk, not containing chymosin and a component that is not derived from milk, and having a casein content in protein of less than 13%.

[6] Whey containing at least whey protein as protein, not containing milk coagulating enzyme and a component that is not derived from milk, and having a casein content in protein of less than 13%.

[7] Whey containing at least whey protein as protein, not containing chymosin and a component that is not derived from milk, and having a casein content in protein of less than 13%.

The whey of the present invention can be produced by, for example, the method for producing whey of the present invention described above.

(Application)

The application of the whey of the present invention is not particularly limited, and the whey can be used in the same application as conventional whey.

For example, WPC or WPI can be obtained by subjecting the whey of the present invention to ultrafiltration (UF) membrane treatment and drying and pulverizing the obtained protein-concentrated fraction (retentate).

When the UF membrane is used, whey protein does not permeate through the UF membrane, and other components (lactose, minerals, moisture, and the like) having a smaller size than the whey protein permeate through the UF membrane. Therefore, a protein-concentrated fraction having an increased protein content can be obtained by subjecting whey to the UF membrane treatment. The pore diameter of the UF membrane is, for example, 100 nm or less, preferably 1 to 100 nm, and more preferably 1 to 10 nm. As a drying method, a known drying method such as a spray drying method can be appropriately employed. The drying temperature is, for example, 150 to 200°C.

The WPC or WPI obtained from the whey of the present invention has a lower casein contamination rate than the WPC or WPI obtained from conventional milk-derived whey. Therefore, it has excellent solubility in water and is easily blended into a transparent beverage. In addition, since the casein contamination rate is low, it is difficult to coagulate even when it is blended in an acidic beverage or the like, and it can be blended in various foods and drinks. Therefore, the whey of the present invention is suitable as a raw material for WPC or WPI.

Examples

Hereinafter, the present invention will be described in more detail with reference to Examples. However, the present invention is not limited to these examples.

<Measurement Method>

The fat content (% by mass) was determined by the Roese-Gottlieb method.

The protein content (% by mass) was determined by the combustion method.

The ash content (% by mass) was determined by the direct ashing method.

The moisture content (% by mass) was determined by the direct heat drying method.

The carbohydrate content (% by mass) was determined by subtracting the sum of the four components (fat, protein, ash, and moisture) from the sum of all components (calculation formula: 100 - (sum of the four components of fat, protein, ash, and moisture)).

The solid content concentration (% by mass) was calculated as a content other than the moisture content from the moisture content measured by the direct heat drying method (calculation formula: 100 - moisture content = solid content concentration).

The $F_O$ value was calculated by the above equation (2).

SDS-PAGE was subjected to electrophoresis according to the Q-PAGE system (TEFCO) using a separation gel of 5-14% Q-PAGE mini (TEFCO). The electrophoresis tank and the power supply used were manufactured by ATTO Corporation. Electrophoresis was performed for 1 hour under the conditions of a voltage of 200 V and a current of 40 mA. After electrophoresis, the separated gel was removed, and the gel was stained for 3 hours using Ezstain AQUA (ATTO Corporation). The gel was then destained with distilled water for 4 hours. The stained and destained gel was subjected to Gel DOC™ EZ Imager (Bio-Rad Laboratories, Inc.) to measure the staining intensity of each stained band in the gel.

<Test Example 1>

In this test, the influence of the presence or absence of heating before the MF membrane treatment and the heating condition ($F_O$ value) on the casein contamination rate was examined. The skim milk that had been heat-treated under the heating conditions of Examples 1 to 8 shown in Table 1 was subjected to MF membrane treatment by the following method. On the other hand, in Example 9 shown in Table 1, heat treatment was not performed in the following method.

Skim milk obtained by separation from raw milk by Morinaga Milk Industry Co., Ltd. was stored at 4°C for 2 days. Next, the skim milk was heat-treated using a tubular sterilizer under the heating conditions shown in Table 1, and then cooled to 10°C. The skim milk was subjected to MF membrane treatment within 600 seconds after cooling. In the MF membrane treatment, 330 g of the skim milk was circulated while maintaining a pressure of 0.1 MPa with a small MF apparatus (manufactured by IDEX corporation, pore size of MF membrane: 0.2 μm) while maintaining 10°C. After the skim milk was circulated for 30 minutes, and after confirming that the solid content concentration of the membrane permeation fraction became constant, the membrane separation treatment was continued for 1 hour, and then a sample of the membrane permeation fraction was fractionated.

SDS-PAGE (sodium dodecyl sulfate-polyacrylamide gel electrophoresis) was performed on a sample of the fractionated membrane permeation fraction. After SDS-PAGE, the casein contamination rate (the content of casein in the protein) was determined as the ratio of the total band intensity of "α-casein, β-casein, and κ-casein" to the total band intensity of "α-casein, β-casein, κ-casein, β-lactoglobulin, and α-lactalbumin" (corresponding to the total protein).

Table 1 shows the casein contamination rate of the fractionated membrane permeation fraction. Fig. 1 shows the relationship between the $F_O$ value and the casein contamination rate of the fractionated membrane permeation fraction. In Table 1 and Fig. 1, "1.0E-08" of the $F_O$ value means $1.0 \times 10^8$. The same applies to other $F_O$ values.

Table 2 shows the composition of the membrane permeation fraction obtained in Example 5. The content of whey protein in the protein was determined as the ratio of the total band intensity of "β-lactoglobulin and α-lactalbumin" to the total band intensity of "α-casein, β-casein, κ-casein, β-lactoglobulin, and α-lactalbumin" and found to be 93.8%.

Table 1

| | Heating temperature (°C) | Heating time (seconds) | $F_O$ value | Casein contamination rate in membrane permeation fraction (%) |
|---|---|---|---|---|
| Example 1 | 35 | 15 | 6.3E-10 | 15.4 |
| Example 2 | | 240 | 1.0E-08 | 11.5 |
| Example 3 | 50 | 15 | 2.0E-08 | 12.4 |
| Example 4 | | 240 | 3.2E-07 | 10.7 |
| Example 5 | 55 | 15 | 6.3E-08 | 6.2 |
| Example 6 | | 240 | 1.0E-06 | 8.3 |
| Example 7 | 75 | 15 | 6.3E-06 | 9.7 |
| Example 8 | | 240 | 1.0E-04 | 12.6 |
| Example 9 | Without heating | | | 13.2 |

Table 2

| | Composition (% by mass) |
|---|---|
| Moisture | 94.6 |
| Protein | 0.5 |
| Fat | 0.0 |
| Ash | 0.6 |
| Carbohydrate | 4.3 |

In Examples 2 to 8 in which the raw material milk was subjected to the heat treatment under the heating condition in which the $F_O$ value was $1.0 \times 10^{-9}$ or more before the MF membrane treatment, the casein contamination rate was reduced compared to Example 9 in which the heat treatment of the raw material milk was not performed while the MF membrane treatment was performed at a low temperature.

In Example 1 in which the raw material milk was subjected to the heat treatment under the heating condition in which the $F_O$ value was less than $1.0 \times 10^{-9}$ before the MF membrane treatment, the casein contamination rate was higher than that in Example 9.

**Claims**

1. A method for producing whey, comprising:

   a step of heating raw material milk containing casein and whey protein under a heating condition of an $F_o$ value of $1.0 \times 10^{-9}$ or more;
   a step of cooling the raw material milk heated under the heating condition to a temperature $T_1$ of less than 20°C; and
   a step of subjecting the raw material milk cooled to the temperature $T_1$ to microfiltration membrane treatment to obtain whey as a membrane permeation fraction.

2. The method for producing whey according to claim 1, wherein the heating is performed under a heating condition of 35°C or higher.

3. The method for producing whey according to claim 1 or 2, further comprising a step of cooling the raw material milk to a temperature $T_0$ of 10°C or lower before heating the raw material milk.

4. Whey comprising a microfiltration membrane permeation fraction of raw material milk, wherein the whey has a casein content in protein of less than 13%.

FIG. 1

<table>
<tr><td colspan="2" align="center">**INTERNATIONAL SEARCH REPORT**</td><td>International application No.</td></tr>
<tr><td colspan="2"></td><td>PCT/JP2020/013637</td></tr>
</table>

A. CLASSIFICATION OF SUBJECT MATTER
Int.Cl. A23C9/14(2006.01)i, A23C9/142(2006.01)i, A23C21/00(2006.01)i, A23J3/08(2006.01)i
FI: A23C21/00, A23C9/142, A23J3/08, A23C9/14
According to International Patent Classification (IPC) or to both national classification and IPC

B. FIELDS SEARCHED

Minimum documentation searched (classification system followed by classification symbols)
Int.Cl. A23C9/14, A23C9/142, A23C21/00, A23J3/08

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
JSTPlus/JMEDPlus/JST7580(JDreamIII), FSTA/CAplus/WPIDS(STN)

C. DOCUMENTS CONSIDERED TO BE RELEVANT

| Category* | Citation of document, with indication, where appropriate, of the relevant passages | Relevant to claim No. |
|---|---|---|
| X | JP 2014-514929 A (FRIESLAND BRANDS B.V.) 26.06.2014 (2014-06-26), claims, paragraphs [0035], [0047] | 1-4 |
| X | JP 2001-017078 A (NOVATREAT OY) 23.01.2001 (2001-01-23), example 2 | 1-3 |
| X | ZULEWSKA, J., BARBANO, D. M., Influence of casein on flux and passage of serum proteins during microfiltration using polymeric spiral-wound membranes at 50°C, J. Diary Sci. 2013, vol. 96, no. 4, pp. 2048-2060, fig. 1, table 1 | 4 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01.06.2020 | 16.06.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

```
JP 2014-514929 A    26.06.2014    WO 2012/148269 A1
                                  claims, page 10, lines 23-27,
                                  page 14, results
                                  US 2014/0057040 A1
                                  EP 2701524 A1

JP 2001-017078 A    23.01.2001    US 6426109 B1
                                  example 2
                                  EP 1055372 A2
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019065450 A
- WO 2007055932 A

- JP 2016503660 T

**Non-patent literature cited in the description**

- **ALI E. ALI.** *J. Dairy Research,* 1980, vol. 47, 371-382
- **SHANE V. CROWLEY.** *International Dairy J.,* 2018, vol. 81, 72-79

- **FUJIKAWA.** *Japan Journal of Food Engineering,* 2002, vol. 3 (3), 65-78
- **R. Y. MURPHY et al.** *Journal of food protection,* 2003, vol. 66 (2), 242-248